# EUROPEAN PATENT SPECIFICATION

(11) **EP 1 398 243 B1**
(45) Date of publication and mention of the grant of the patent: **03.05.2006**
(21) Application number: 03102719.6
(22) Date of filing: 08.09.2003
(51) Int. Cl.: B62D 7/20, B60K 17/30, B62D 7/16

(54) **Vehicle axle**
Fahrzeugachse
Essieu de véhicule

(30) Priority: 13.09.2002 IT BO20020578
(43) Date of publication of application: 17.03.2004
(73) Proprietor: CNH Italia S.p.A., 41100 Modena (IT)
(72) Inventor: Pertusi, Pierluigi, Campogalliano (IT)
(74) Representative: CNH IP Department

(56) References cited:
- DE-C- 19 526 453
- US-A- 5 921 343
- US-B1- 6 202 781

## Description

The present invention relates to a vehicle axle.

More specifically, the present invention relates to a front axle of a tractor of the type described, for example, in EP-A-1.006.015, to which the following description refers purely by way of example.

In the farm machinery sector, a tractor is known comprising a front axle supporting two front wheels of the tractor, and comprising an elongated central, box-shaped axle body, and two lateral members, each of which is engaged in rotary manner by one of the wheels, and is hinged to the central axle body to rotate, with respect thereto, about a respective hinge axis.

The axle body has a central cavity, which houses a differential of a transmission assembly for transmitting power from an input shaft to the wheels. The cavity is closed by a cover at which the axle is connected to a free end of a supporting bar placed crosswise to the axle body. The supporting bar extends rearwardly of the axle body and is pivotally connected to the tractor frame at its other end. An intermediate suspension mechanism is provided to allow up an down movement of the axle body.

The angular position of the lateral members, and hence of the wheels, about the respective hinge axes is controlled by a steering assembly comprising at least one steering actuating cylinder acting on one of the lateral members. A connecting bar furthermore extends between the lateral members which, when a steering movement is made, oscillates about an instantaneous axis of rotation according to a given law of motion, one component of movement being parallel to the longitudinal axis of the tractor.

Known front axles of the above type therefore have the major drawback that, when the connecting bar is necessarily located behind the axle body in the travelling direction of the tractor, to keep the front part of the tractor clear, e.g. to attach an operating unit or implement, the distance between the suspension mechanism and the axle body is greater than a given value to enable the instantaneous axis of rotation to move parallel to the longitudinal axis of the tractor, so that the tractor requires a relatively long wheel base.

The embodiment of US-B-6.202.781, disclosing the preamble of claim 1, although providing a connecting bar which is subjected, in part, to lateral shifting movements only, has the disadvantage that it needs to be installed in front of the axle body. Since the connecting bar is supported by brackets which extend even further than the steering actuator, the overall steering arrangement takes up a considerable space, which is in contrast to the compact design aimed for by the present invention.

It is an object of the present invention to provide a vehicle axle designed to eliminate the aforementioned drawbacks.

According to the present invention, there is provided a vehicle axle comprising :
- a supporting frame having a box-shaped, central axle body;
- two lateral members engaged in rotary manner by respective vehicle wheels and connected in rotary manner to said frame to oscillate about respective axes of rotation;
- power transmission means interposed between said wheels and a power input shaft; said frame housing at least part of said power transmission means; and
- a steering assembly for controlling the angular position of the lateral members about the relative axes of rotation, and comprising at least one steering actuating cylinder acting on one of the lateral members and a connecting bar extending between the lateral members; said connecting bar comprising a central portion and two lateral portions, each connected in rotary manner to said central portion and to a respective lateral member.

The axle is characterized in that said supporting frame further comprises a cover closing the central axle body; said cover being engaged in sliding manner by said central portion.

A non-limiting embodiment of the present invention will now be described, by way of example, with reference to the accompanying drawings, in which:

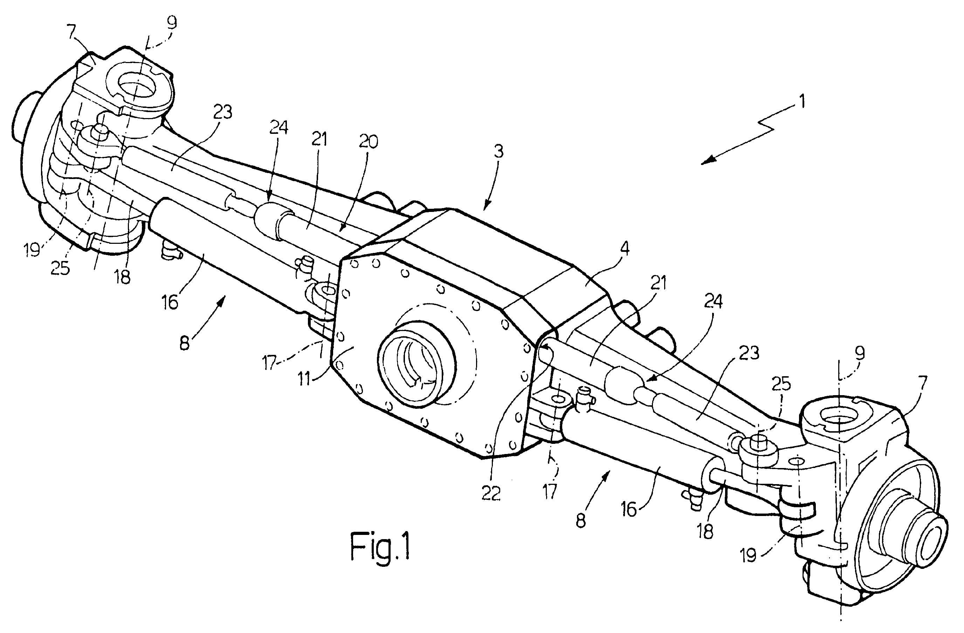

Figure 1 shows a schematic view in perspective of a preferred embodiment of the axle according to the present invention; and
Figure 2 shows a schematic side view, with parts in section and parts removed for clarity, of the Figure 1 axle fitted to a tractor.

Number 1 in the accompanying drawings indicates as a whole a vehicle axle - in the example shown, a front axle of an agricultural tractor (not shown).

Axle 1 supports two front wheels 2 of the tractor, and comprises a supporting frame 3, in turn comprising a central, box-shaped axle body 4, which has a longitudinal axis 5, extending transversely of the tractor, and two lateral members 7, each of which is engaged in rotary manner by one of the wheels 2. Each lateral member 7 is hinged to axle body 4, and is oscillated, with respect to body 4, about a respective hinge axis 9 by a steering device 8 described in detail further on.

Axle body 4 comprises a central cavity 10, which has a rearwardly facing opening and is closed by a cover 11, attached to the axle body 4. Two roller bearings 12 are incorporated in the cover 11 for rotatably supporting a stub axle 13 which may be driven by an input shaft 14. Through a known transmission assembly 15 substantially housed in axle 1, power is transmitted from the input shaft 14 to the wheels 2.

Steering device 8 controls the angular position of the lateral members 7, and hence of the wheels 2, about respective axes 9. Device 8 comprises two steering actuating cylinders 16, each of which provides for moving one of the members 7 about a respective axis 9. Each cylinder 16 is hinged to cover 11 to oscillate, with respect to cover 11, about a hinge axis 17, and has a respective output rod 18 hinged to a corresponding member 7 to oscillate about a hinge axis 19 substantially parallel to corresponding axis 17. In an alternative embodiment, device 8 comprises only one hydraulic cylinder 16 acting only on one of the members 7.

Device 8 further comprises a connecting bar or rod 20 extending between the members 7. As well known in the art, the connecting bar 20 functions as a synchroniser of the movement of the two steerable wheels 2. The bar 20 comprises a substantially straight central portion 21 engaging in axially sliding manner a guide hole 22 formed through cover 11 and having substantially the same cross section as portion 21.

In two alternative embodiments not shown, portion 21 engages in sliding manner a sliding bearing or a bush extending through cover 11 to define hole 22.

Bar 20 further comprises two lateral portions 23 on opposite sides of portion 21. Each portion 23 has a first free end at which portion 23 is connected in rotary manner to portion 21 by the interposition of a spherical articulated joint 24, and a second free end at which portion 23 is hinged to a corresponding member 7 to oscillate, with respect to said member 7, about a hinge axis 25 substantially parallel to axis 19. Alternatively, in an embodiment not shown, each portion 23 may be connected to a corresponding member 7 by the interposition of a further spherical articulated joint.

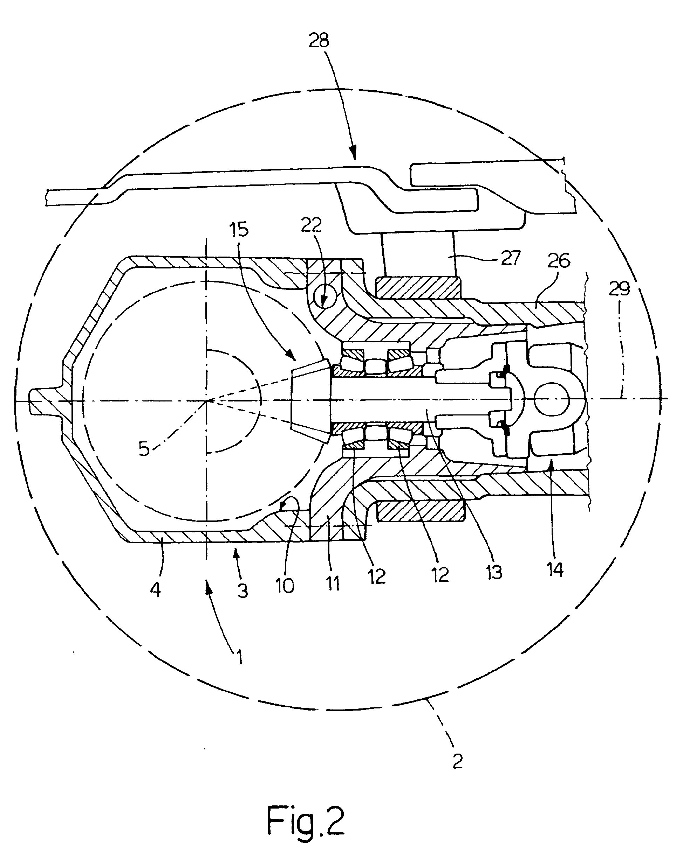

With reference to Figure 2, once assembled, axle 1 is fixed to one end of a supporting arm 26. The other end of the supporting arm 26 is pivotally attached to the frame 28 of the tractor at a location rearwardly of the axle 1, as seen in the direction of forward travel. Close to the axle 1, the supporting arm 26 is movably held by a suspension mechanism 27 allowing up and down movement of the axle 1 in a suspended manner.

Providing the central portion 21 of connecting bar 20 in a sliding manner through the cover 11 of axle body 4 results in a relatively compact axle 1 of relatively short longitudinal length as measured parallel to a longitudinal axis 29 of the tractor.

This compactness of axle 1 therefore provides for maintaining the wheel base of the tractor below an otherwise larger value. By the same token, also the distance between the axis 5 of the axle 1 and the suspension mechanism 27 can be kept to a minimum, consequently reducing the bending moment exerted on axle 1 by frame 28.

Axle 1 may obviously also be used as a rear axle of the tractor, in case the rear wheels of the tractor would also be directional.

## Claims

1. A vehicle axle comprising :
- a supporting frame (3) having a box-shaped, central axle body (4);
- two lateral members (7) engaged in rotary manner by respective vehicle wheels (2) and connected in rotary manner to said frame (3) to oscillate about respective axes of rotation (9);
- power transmission means (15) interposed between said wheels (2) and a power input shaft (14); said frame (3) housing at least part of said power transmission means (15); and
- a steering assembly (8) for controlling the angular position of the lateral members (7) about the relative axes of rotation (9), and comprising at least one steering actuating cylinder (16) acting on one of the lateral members (7) and a connecting bar (20) extending between the lateral members (7); said connecting bar (20) comprising a central portion (21) and two lateral portions (23), each connected in rotary manner to said central portion (21) and to a respective lateral member (7); and
**characterized in that** said supporting frame (3) further comprises a cover (11) closing the central axle body (4); said cover (11) being engaged in sliding manner by said central portion (21).

2. An axle according to claim 1, **characterized in that** said cover (11) comprises a guide hole (22) having a cross section substantially similar to the cross section of said central portion (21).

3. An axle according to any of the preceding claims, **characterized in that** said frame (3) has a longitudinal axis (5), oriented transversely of said vehicle; said central portion (21) extending substantially parallel to said longitudinal axis (5).

4. An axle according to any of the preceding claims, **characterized in that** said central portion comprises spherical connecting means (24) interposed between each said lateral portion (23) and said central portion (21).

5. An axle according to any of the preceding claims, **characterized in that** each said lateral portion (23) comprises a spherical connecting means interposed between said lateral portion (23) and a corresponding lateral member (7).

6. An axle according to any of the claims 1 to 4, **characterized in that** each said lateral portion (23) is hinged to a corresponding lateral member (7) to oscillate about a respective hinge axis (25).

## Revendications

1. Essieu de véhicule comprenant :
- un châssis porteur (3) possédant un corps d'essieu central (4) en forme de caisson ;
- deux éléments latéraux (7) engagés de manière rotative par des roues de véhicule (2) respectives et reliés de manière rotative audit châssis (3) de manière à osciller autour de leurs axes de rotation (9) respectifs ;
- des moyens de transmission de puissance (15) intercalés entre lesdites roues (2) et un arbre d'entrée de puissance (14) ; ledit châssis (3) abritant au moins une partie desdits moyens de transmission (15) de puissance, et
- un montage de direction (8) pour le contrôle de la position angulaire des éléments latéraux (7) autour des axes de rotation (9) relatifs et comprenant au moins un cylindre d'actionnement de la direction (16) agissant sur l'un des éléments latéraux (7) et une barre de liaison (20) se prolongeant entre les éléments latéraux (7) ; ladite barre de liaison (20) comprenant une partie centrale (21) et deux parties latérales (23), dont chacune est reliée de manière à pivoter à ladite partie centrale (21) et à un élément latéral correspondant (7); et
en ce que ledit châssis porteur (3) comprend également un couvercle (11) fermant le corps d'essieu central (4), ledit couvercle (11) étant engagé de manière à coulisser dans ladite partie centrale (21).

2. Essieu selon la revendication 1, **caractérisé en ce que** ledit couvercle (11) comprend un orifice de guidage (22) possédant une coupe transversale essentiellement similaire à la coupe transversale de ladite partie centrale (21).

3. Essieu selon l'une quelconque des revendications précédentes, **caractérisé en ce que** ledit châssis (3) possède un axe longitudinal (5), orienté transversalement par rapport audit véhicule ; ladite partie centrale (21) s'étendant parallèlement, pour l'essentiel, audit axe longitudinal (5).

4. Essieu selon l'une quelconque des revendications précédentes, **caractérisé en ce que** ladite partie centrale comprend des moyens de liaison sphériques (24) interposés entre chaque dite partie latérale (23) et ladite partie centrale (21).

5. Essieu selon l'une quelconque des revendications précédentes, **caractérisé en ce que** chaque dite partie latérale (23) comprend un moyen de liaison sphérique interposé entre ladite partie latérale (23) et un élément latéral correspondant (7).

6. Essieu selon l'une quelconque des revendications 1 à 4, **caractérisé en ce que** chaque dite partie latérale (23) est articulée sur un élément latéral correspondant (7) de manière à osciller autour d'un axe d'articulation correspondant (25).

## Patentansprüche

1. Fahrzeugachse mit:
- einem Tragrahmen (3), der einen kastenförmigen zentralen Achskörper (4) aufweist;
- zwei seitlichen Bauteilen (7), die in einer drehbaren Weise mit jeweiligen Fahrzeugrädern (2) verbunden sind und die in drehbarer Weise mit dem Rahmen (3) verbunden sind, um um jeweilige Drehachsen (9) zu schwingen;
- Leistungsübertragungseinrichtungen (15), die zwischen den Rädern (2) und einer Leistungseingangswelle (14) eingefügt sind, wobei der Rahmen (3) zumindest einen Teil der Leistungsübertragungseinrichtungen (15) aufnimmt; und
- eine Lenkungsbaugruppe (8) zur Steuerung der Winkelposition der seitlichen Bauteile (7) um die jeweiligen Drehachsen (9), die zumindest einen Lenkungs-Betätigungszylinder (16), der auf eines der seitlichen Bauteile (7) wirkt, und eine Verbindungsstange (20) umfasst, die sich zwischen den seitlichen Bauteilen (7) erstreckt, wobei die Verbindungsstange (20) einen Mittelteil (21) und zwei seitliche Teile (23) umfasst, die jeweils in drehbarer Weise mit dem Mittelteil (21) und einem jeweiligen seitlichen Bauteil (7) verbunden sind; und
- **dadurch gekennzeichnet, dass** der Tragrahmen (3) weiterhin einen Deckel (11) umfasst, der den zentralen Achskörper (4) verschließt, wobei der Mittelteil (21) gleitend mit dem Deckel (11) in Eingriff steht.

2. Achse nach Anspruch 1, **dadurch gekennzeichnet, dass** der Deckel (1) eine Führungsbohrung (22) umfasst, die einen Querschnitt aufweist, der im Wesentlichen ähnlich dem Querschnitt des Mittelteils (21) ist.

3. Achse nach einem der vorhergehenden Ansprüche, **dadurch gekennzeichnet, dass** der Rahmen (3) eine längsgerichtete Achse (5) aufweist, die quer zu dem Fahrzeug gerichtet ist, wobei sich der Mittelteil (21) im Wesentlichen parallel zu der Längsachse (5) erstreckt.

4. Achse nach einem der vorhergehenden Ansprüche, **dadurch gekennzeichnet, dass** der Mittelteil Kugelverbindungselemente (24) umfasst, die zwischen jedem der seitlichen Teile (23) und dem Mittelteil (21) eingefügt sind.

5. Achse nach einem der vorhergehenden Ansprüche, **dadurch gekennzeichnet, dass** jeder seitliche Teil (23) eine Kugelverbindungseinrichtung umfasst, die zwischen dem seitlichen Teil (23) und einem entsprechenden seitlichen Bauteil (7) eingefügt ist.

6. Achse nach einem der Ansprüche 1-4, **dadurch gekennzeichnet, dass** jeder seitliche Teil (23) mit einem entsprechenden seitlichen Bauteil (7) gelenkig verbunden ist, um um eine jeweilige Gelenkachse (25) zu schwingen.
